# EUROPEAN PATENT APPLICATION

(11) **EP 4 353 693 A1**
(43) Date of publication of application: **17.04.2024**
(21) Application number: 22820322.0
(22) Date of filing: 09.06.2022
(51) Int. Cl.: C03C 17/32, B32B 17/10, C09D 201/02

(54) **ANTIFOG FILM-EQUIPPED GLASS ARTICLE FOR SECURITY CAMERAS, SECURITY CAMERA, AND METHOD FOR PRODUCING ANTIFOG FILM-EQUIPPED GLASS ARTICLE FOR SECURITY CAMERAS**

(30) Priority: 11.06.2021 JP 2021098340
(71) Applicant: NIPPON SHEET GLASS COMPANY, LIMITED, Tokyo 108-6321 (JP)
(72) Inventor: HAYASHI Kiyomi, Tokyo 108-6321 (JP); SHIMAMURA, Yuki, Tokyo 108-6321 (JP); OYA Kazuaki, Tokyo 108-6321 (JP)
(74) Representative: Cabinet Beau de Loménie
(86) International application number: PCT/JP2022/023353
(87) International publication number: WO 2022/260143

(57) **Abstract**

The present invention provides an antifog-film-attached glass article for security cameras that includes: a glass base; and an antifog film on a surface of the glass base, wherein after a predetermined water immersion test is performed, information of a predetermined QR code (registered trademark) of a 40 mm square size is readable. The antifog film may include an organic polymer having a betaine structure. The antifog film can be manufactured by applying a coating liquid including the organic polymer onto a surface of the glass base and heating, at 90 to 190°C, the glass base onto which the coating liquid has been applied.

## Description

### TECHNICAL FIELD

The present invention relates to an antifog-film-attached glass article for security cameras, a security camera, and a method for manufacturing an antifog-film-attached glass article for security cameras.

### BACKGROUND ART

Transparent bases typically made of glass may have antifog films formed thereon in order to impart antifog properties. For example, Patent Literature 1 discloses an antifog film containing a polyvinyl acetal resin, which is a water-absorbing resin, and a silica component such as colloidal silica.

### CITATION LIST

### Patent Literature

Patent Literature 1: JP 2012-117025 A

### SUMMARY OF INVENTION

### Technical Problem

According to studies by the present inventors, however, conventional antifog films are not suitable for maintaining the imaging function of security cameras for which the demand has been increasing. In view of this, the present invention aims to provide an antifog-film-attached glass article suitable for use in security cameras.

### Solution to Problem

In the present description, the mention of QR code being a registered trademark is hereinafter omitted.

The present invention provides an antifog-film-attached glass article for security cameras, the antifog-film-attached glass article including:
a glass base; and
an antifog film on a surface of the glass base, wherein
in a test in which:
   the antifog-film-attached glass article is immersed in water at 25°C for 100 hours and removed from the water;
   subsequently the antifog film is exposed for 30 seconds to water vapor generated from water at 90°C to 100°C disposed at a distance of 60 mm from the antifog film downward in a vertical direction; and
   subsequently a judgment is made as to whether information of a QR code disposed at a distance of 110 mm from the antifog film downward in the direction is readable with a camera from an opposite side to a formation side of the antifog film,
information of a QR code of a 40 mm square size is readable
where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

In another aspect, the present invention provides an antifog-film-attached glass article for security cameras, the antifog-film-attached glass article including:
a glass base; and
an antifog film on a surface of the glass base, wherein
the antifog film includes an organic polymer having a betaine structure, and
when a test is performed in which: the antifog-film-attached glass article is immersed in water at 25°C for 100 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

In still another aspect, the present invention provides a security camera including:
a camera; and
the antifog-film-attached glass article for security cameras according to the present invention disposed in front of a lens of the camera.

In yet another aspect, the present invention provides a method for manufacturing an antifog-film-attached glass article for security cameras, the antifog-film-attached glass article including a glass base and an antifog film on the glass base, the method including:
applying, onto a surface of the glass base, a coating liquid including an organic polymer having a betaine structure; and
heating, at a temperature of 90 to 190°C, the glass base onto which the coating liquid has been applied.

### Advantageous Effects of Invention

The present invention provides an antifog-film-attached glass article suitable for maintaining the imaging function of security cameras.

### BRIEF DESCRIPTION OF DRAWINGS

FIG. 1 is a cross-sectional view showing an example of an antifog-film-attached glass article according to an embodiment of the present invention.
FIG. 2 is a cross-sectional view showing another example of the antifog-film-attached glass article according to the embodiment.
FIG. 3 is a schematic view showing an example of a security camera according to the embodiment.
FIG. 4 is a schematic view showing another example of the security camera according to the embodiment.
FIG. 5A is a schematic view for illustrating the outline of a high-temperature water vapor evaluation.
FIG. 5B is another schematic view for illustrating the outline of the high-temperature water vapor evaluation.
FIG. 6A shows a QR code example (10 mm × 10 mm size, recorded information "Rank:SSS") used for the high-temperature water vapor evaluation.
FIG. 6B shows a QR code example (15 mm × 15 mm size, recorded information "Rank:SS") used for the high-temperature water vapor evaluation.
FIG. 6C shows a QR code example (20 mm × 20 mm size, recorded information "Rank:S") used for the high-temperature water vapor evaluation.
FIG. 6D shows a QR code example (30 mm × 30 mm size, recorded information "Rank:A") used for the high-temperature water vapor evaluation.
FIG. 6E shows a QR code example (40 mm × 40 mm size, recorded information "Rank:B") used for the high-temperature water vapor evaluation.

### DESCRIPTION OF EMBODIMENT

An embodiment of the present invention will be described below with reference to the drawings as appropriate. The present invention is not limited to the following embodiment. In the present description, a "main component" refers to a component contained in the highest content among the components contained. Furthermore, "principal surfaces" of a plate-shaped article refer to two surfaces facing away from each other at a predetermined distance, called the thickness.

As disclosed in Patent Literature 1, antifog films often have added thereto, together with a water-absorbing polymer, an inorganic component that compensates for a decrease in abrasion resistance, typically a silica component such as colloidal silica. Antifog-film-attached glass articles that achieve a high abrasion resistance as well as antifog properties are suitable for use as window panes for automobiles. In contrast, glass articles for use together with security cameras are not required to have a high-level abrasion resistance. It is appropriate to proceed with development of antifog-film-attached glass articles for security cameras from a perspective different from that of antifog-film-attached glass articles for automobiles.

The greatest emphasis for antifog-film-attached glass articles for security cameras that should be placed on is that even a long-time exposure of antifog films to a harsh environment does not impair the imaging function of security cameras. An antifog-film-attached glass article according to the present embodiment has been achieved through further studies made from such a perspective, and can exhibit a function of transmitting light without scattering at a high level even when the antifog film is exposed to a harsh environment.

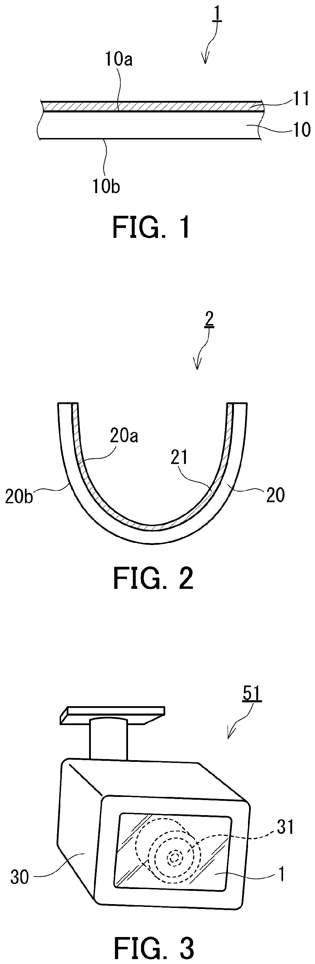

FIG. 1 is a cross-sectional view showing the antifog-film-attached glass article according to the present embodiment. An antifog-film-attached glass article 1 includes a plate-shaped glass base 10, that is, a glass substrate, and an antifog film 11 formed on the surface of the glass base 10. The antifog film 11 is formed on at least a portion of a surface of the glass base 10, for example, a principal surface of the glass base 10. The antifog film 11 may be formed on both principal surfaces 10a and 10b of the plate-shaped glass base 10, or may be formed only on the one principal surface 10a as shown in FIG. 1.

### [Glass base]

The shape and material of the glass base 10 are not particularly limited. The glass base 10 is, for example, a glass sheet.

The glass composition of the glass sheet is not particularly limited, and may be soda-lime glass, aluminosilicate glass, borosilicate glass, alkali-free glass, or even multicomponent glass called C-glass, E-glass, etc. The multicomponent glass contains SiO₂ as the main component, and further contains a component other than SiO₂, for example, at least one oxide selected from the group consisting of B₂O₃, Al₂O₃, MgO, CaO, Li₂O, Na₂O, and K₂O. The glass sheet, however, may be made of silica glass.

The glass sheet may be float glass. Float glass is shaped by a so-called float process. Since float glass is shaped in a float bath with one principal surface in contact with molten tin, the tin becomes diffused over the one principal surface. Accordingly, one principal surface, called a bottom surface, of float glass has a surface layer formed of tin diffused thereon, whereas the other principal surface, called a top surface, does not have such a surface layer. From another perspective, the tin concentration in float glass is higher on one principal surface than on the other principal surface. The glass sheet, however, may be shaped by a manufacturing process other than the float process, for example, the overflow downdraw process.

In the case where float glass is used as the glass base, the antifog film is desirably formed on the bottom surface of the float glass. Accordingly, in the case where the glass base 10 in FIG. 1 is float glass, the principal surface 10a is preferably the bottom surface though it may be the top surface. The bottom surface has more hydroxy groups than the top surface, and accordingly is suitable as the surface on which an antifog film having an excellent water resistance is to be formed.

The thickness of the glass sheet is, for example, 0.5 to 7.0 mm, and may be 0.5 to 5.0 mm. In the case where impact resistance should be emphasized, the glass sheet that is non-strengthened glass has a thickness of preferably 3.5 mm or more. Note that the glass sheet that is strengthened glass having a thickness of 1.8 mm or more can have a sufficient impact resistance. The strengthened glass may be either thermally strengthened glass or chemically strengthened glass.

As shown in FIG. 1, the glass base 10 may have a flat plate shape whose principal surfaces are flat surfaces. The principal surfaces of the glass base, however, may be curved surfaces. For example, the glass base may be obtained by bending a flat-plate-shaped glass substrate. The glass base may be a shaped body having curved surfaces obtained not by shaping from a flat-plate-shaped glass substrate but by directly shaping from a molten material. FIG. 2 shows an example of such a shaped body.

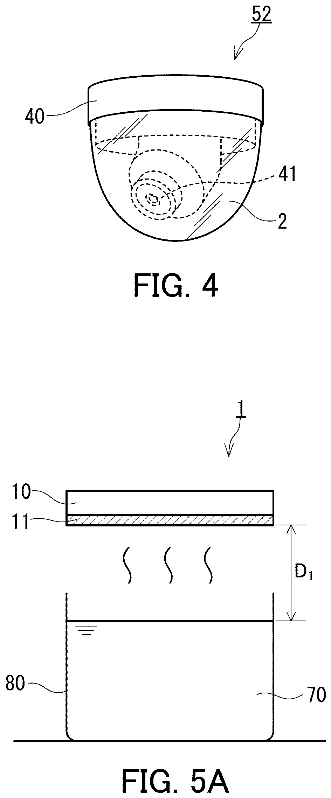

A glass base 20 shown in FIG. 2 has principal surfaces that are both curved surfaces, and one principal surface 20a is a concave surface, and the other principal surface 20b is a convex surface. On the front surface of the principal surface 20a, which is a concave surface, an antifog film 21 is formed. The principal surface 20a faces the lens of a security camera that is not shown in the figure. The glass base 20 has a dome shape, and the inside of the dome shape can be used as a space in which the lens of the security camera is to be placed (see FIG. 4). In other words, the glass base 20 has a concave surface facing the space in which the lens of the security camera is to be placed.

On the principal surface of the glass base, an underlying film may be formed. In this case, the underlying film is interposed between the surface of the glass base and the antifog film. The underlying film is not particularly limited, and may be, for example, a barrier film preventing elution of an alkali metal from the glass. The barrier film is, for example, a silica film.

In the case where the antifog film is formed only on one principal surface of the glass base, a film other than the antifog film may be formed on the other principal surface. Examples of such a film include an antireflection film, a water-repellent film, a hydrophilic film, and a colored film.

### [Antifog film]

The film thickness of each of the antifog films 11 and 21 is not limited to a specific value, and is 1.0 to 1000 nm, preferably 10 to 500 nm, and particularly preferably 30 to 150 nm.

The antifog films 11 and 21 each include, for example, an organic polymer having a betaine structure. The betaine structure is a structure in which a positive charge and a negative charge are not in adjacent positions in the same molecule and no dissociable hydrogen atom is directly bonded to a positively charged atom. Examples of the positively charged atom include a nitrogen atom, a sulfur atom, and a phosphorus atom. Examples of the negatively charged atom include an oxygen atom. The betaine structure may be a polymer of a betaine monomer which will be described later. The molecular weight of the organic polymer is not particularly limited, and may be 100,000 or more in terms of weight-average molecular weight.

The organic polymer may have a main chain and a side chain containing a betaine structure. The main chain may include a linear carbon chain, and is, for example, a linear alkyl group. The organic polymer may have a structure in which a plurality of side chains are bonded to one main chain. The organic polymer may further include a silicon atom bonded to one terminal of the main chain. The organic polymer may be bonded to the surface of the glass base via the silicon atom. This bond can be formed by a reaction between a hydroxy group on the surface of the glass base and a silanol group. The main chain chemically bonded to the surface of the glass base via the silicon atom can grow upward from the surface of the glass base to form a so-called polymer brush. This polymer brush may be exposed on the surface of the antifog film. The antifog film can be a monomolecular film formed of an organic polymer in which the side chain contains a betaine structure. The organic polymer may be supplied onto the surface of the glass base, for example, as a compound represented by the following Formula (I).

RSiX₃ (I)

R in Formula (I) is an organic group containing a betaine structure. R may contain a polymer of a betaine monomer. Examples of the betaine monomer include sulfoxybetaine monomer, carboxybetaine monomer, and phosphorylbetaine monomer. These betaine monomers may be used alone or two or more thereof may be used in combination. R may contain the main chain and side chain containing a betaine structure described above.

X in Formula (I) is a hydroxy group, or a hydrolyzable group or a halogen atom. Examples of the hydrolyzable group include at least one selected from the group consisting of an alkoxyl group, an acetoxy group, an alkenyloxy group, and an amino group. Examples of the alkoxyl group include a C₁-C₄ alkoxyl group, and specifically a methoxy group, an ethoxy group, a propoxy group, and a butoxy group. The hydrolyzable group is preferably an alkoxyl group, and more preferably a C₁-C₄ alkoxyl group. The halogen atom is, for example, chlorine.

The sulfoxybetaine monomer is represented by, for example, the following Formula (II).

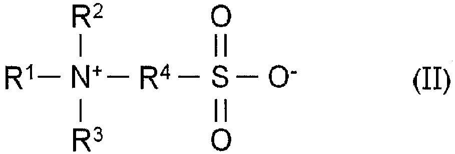

In Formula (II), R¹ is a (meth)acryloylaminoalkyl group having a C₁-C₄ alkyl group or a (meth)acryloyloxyalkyl group having a C₁-C₄ alkyl group. R² and R³ are each independently a hydrogen atom, a C₁-C₄ alkyl group, a C₁-C₄ hydroxyalkyl group, or a (meth)acryloyloxyalkyl group having a C₁-C₄ alkyl group. R⁴ is a C₁-C₄ alkylene group or a C₁-C₄ oxyalkylene group.

The carboxybetaine monomer is represented by, for example, the following Formula (III).

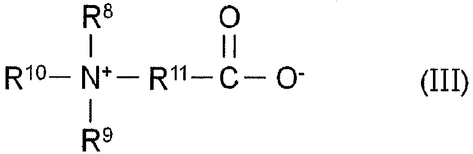

In Formula (III), R⁸ and R⁹ are each independently a hydrogen atom or a C₁-C₄ alkyl group. R¹⁰ is a (meth)acryloyloxyalkyl group having a C₁-C₄ alkyl group. R¹¹ is a C₁-C₄ alkylene group.

The phosphorylbetaine monomer is represented by, for example, the following Formula (IV).

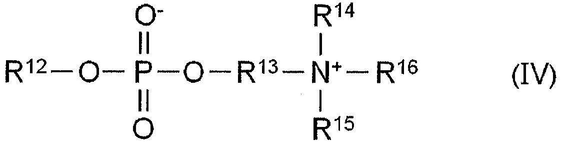

In Formula (IV), R¹² is a (meth)acryloyloxyalkyl group having a C₁-C₄ alkyl group. R¹³ is a C₁-C₄ alkylene group. R¹⁴, R¹⁵, and R¹⁶ are each independently a hydrogen atom or a C₁-C₄ alkyl group.

The betaine monomer may have a structure represented by the following Formula (V).

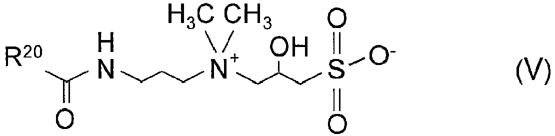

In Formula (V), R²⁰ may be a (meth)acryloyloxyalkyl group having a C₁₁ alkyl group.

The above organic polymer, which has a main chain and a plurality of side chains and in which a silicon atom is bonded to a terminal of the main chain and the side chains contain a betaine structure, can be, for example, LAMBIC 771W manufactured by

### OSAKA ORGANIC CHEMICAL INDUSTRY LTD.

The organic polymer having a betaine structure may be the main component of the antifog film.

The antifog film may contain an ultraviolet absorber, an infrared absorber, a leveling agent (surface conditioner), a light stabilizer, and the like as appropriate in addition to the above components. These components, however, are added in desirably 5 mass% or less, more desirably 3 mass% or less, and particularly desirably 1 mass% or less, relative to the antifog film. The antifog film is not required to have a high abrasion resistance, and accordingly may or may not contain colloidal silica or other silica fine particles. The content of the silica fine particles in the antifog film may be, for example, 10 to 60 mass%, and may be limited to less than 5 mass%, even less than 3 mass%, or particularly less than 1 mass%. The content of oxide fine particles including silica fine particles may also be about the same as described above for the silica fine particles. The antifog film may or may not contain oxide fine particles typified by silica fine particles.

### [Properties of antifog-film-attached glass article]

The antifog film according to the present embodiment can exhibit a function of transmitting transmission light without scattering at a high level, even after a long-time exposure to a harsh environment for antifog films, for example, contact with water. To exhibit this function, the antifog film desirably has, in addition to transparency, water resistance and even hydrophilicity. An antifog film having an insufficient water resistance may cause elution of its components when exposed to moisture for a long time. Furthermore, in the case where an antifog film has hydrophilicity to such an extent that water is retained as a continuous film on the surface of the antifog film, transmission light can be transmitted without excessive scattering.

### (Transparency/Non-scattering properties of transmission light)

The antifog-film-attached glass article according to the present embodiment can transmit transmission light without excessive scattering. Specifically, the antifog-film-attached glass article can have a haze ratio of, for example, 5% or less, even 3% or less, particularly 1% or less, and in some cases, 0.4% or less. The haze ratio is specified in JIS K 7136: 2018.

### (Water resistance/Hydrophilicity)

The antifog-film-attached glass article according to the present embodiment can have both water resistance and hydrophilicity. These properties can be evaluated by a method called a high-temperature water vapor evaluation which will be described in detail in the Examples section. This method supplies high-temperature and excessive water vapor to the antifog film with the antifog film turned vertically downward. When the antifog film is brought into contact with this water vapor, a transparent continuous film of water is formed on a portion directly exposed to the water vapor on the surface of the antifog film that is excellent in hydrophilicity and water resistance. Being a "transparent continuous film" can be determined by visually confirming that the continuity as a film, not a water drops, is ensured and that the film has not become fogged. Fogging of a film can be caused by whitening of the film due to an insufficient water resistance or by dew condensation on the film surface due to insufficient antifog properties. On the surface of a film having an insufficient hydrophilicity, water is not retained as a continuous film but is dispersed and adhered as water drops. On a film having an insufficient water resistance, whitening of the film due to contact with high-temperature water vapor is observed, and elution of the components of the film, a defect of the film, or the like may occur. The hydrophilicity of the surface is evaluated typically by the contact angle of water. However, this evaluation method only drops an extremely small amount of water drops onto the film, and accordingly does not adequately reproduce a harsh environment. Additionally, the transparent continuous film may coat 80% or more or even 90% or more of the surface of the antifog film exposed to water vapor.

For a more detailed or more phased film evaluation, an information reading evaluation using a QR code can be performed. The details of this evaluation method will be described later in the Examples section as well. In this evaluation method, the antifog-film-attached glass article according to the present embodiment even after immersion in water at room temperature for 100 hours can exhibit a good hydrophilicity to such an extent that it is possible to read preferably a QR code "A" of a 30 mm square size, more preferably a QR code "S" of a 20 mm square size, still more preferably a QR code "SS" of a 15 mm square size, and particularly preferably a QR code "SSS" of a 10 mm square size.

A method for manufacturing the antifog-film-attached glass article according to the present embodiment will be described below.

### [Cleaning of glass base]

The surface of a glass base on which an antifog film is to be formed is preferably cleaned prior to antifog film formation. Examples of the cleaning method include alkaline cleaning and plasma cleaning. Alkaline cleaning is cleaning using an alkaline cleaning liquid. The alkaline cleaning liquid is, for example, an aqueous solution containing a water-soluble alkali metal salt. The cleaning liquid, for example, may contain a surfactant or other components. Plasma cleaning is cleaning by plasma exposure. The plasma cleaning may be cleaning using plasma in a reduced pressure atmosphere or cleaning using atmospheric-pressure plasma (AP plasma cleaning). Alkaline cleaning and plasma cleaning may be performed alone, or both may be performed. In a preferred embodiment, alkaline cleaning and AP plasma cleaning are performed. In this case, the organic polymer can be more strongly bonded to the surface of the glass base.

In the case where the glass base is float glass, the following cleaning is preferably performed.
- In the case where the surface of the float glass onto which the coating liquid is to be applied is the bottom surface, the bottom surface is subjected to at least alkaline cleaning. The bottom surface may be subjected to both alkaline cleaning and plasma cleaning.
- In the case where the surface of the float glass onto which the coating liquid is to be applied is the top surface, the top surface is subjected to both alkaline cleaning and plasma cleaning.

### [Formation of antifog film]

The antifog film can be formed by applying, onto the surface of the glass base, a coating liquid for forming the antifog film, and heating the glass base on which the coating film has been formed from the coating liquid. The solvent used for preparing the coating liquid and the application method for the coating liquid should be any conventionally known material and method. Examples of the application method include spin coating, roll coating, spray coating, dip coating, flow coating, screen printing, and brush coating. The coating film may be appropriately dried before the heating.

The heating temperature for the glass base on which the coating film has been formed is, for example, 90°C or higher, preferably 100°C or higher, and in some cases, 120°C or higher. Furthermore, the heating temperature for the coating film is 190°C or lower, preferably 180°C or lower, and particularly preferably 160°C or lower. The heating time is not particularly limited, and may be 5 to 60 minutes, 5 to 45 minutes, 10 to 45 minutes, or 15 to 30 minutes.

### [Security camera]

FIG. 3 shows an example of a security camera including the antifog-film-attached glass article 1 according to the present embodiment. FIG. 4 shows an example of a security camera including the antifog-film-attached glass article 2 according to the present embodiment. A security camera 51 shown in FIG. 3 includes a camera 31, a housing 30 for fixing the camera, and the antifog-film-attached glass article 1. A security camera 52 shown in FIG. 4 includes a camera 41, a housing 40 for fixing the camera, and the antifog-film-attached glass article 2. Light incident on the lenses of the cameras 31 and 41 from the outside transmits through the respective antifog-film-attached glass articles 1 and 2. On the sides facing the cameras 31 and 41, the respective antifog films are formed.

### Examples

The present invention will be described below in more detail with reference to examples. First, a method for evaluating the properties of samples according to the examples and comparative examples will be described.

### (Water immersion test)

The antifog-film-attached glass article was immersed in a plastic container containing pure water at room temperature (about 25°C) and held in this state for 24 hours or 100 hours. Subsequently, the antifog-film-attached glass article was removed and leaned against a holder for drying. The sample dried was subjected to the following appearance evaluation and high-temperature water vapor evaluation.

### • Appearance evaluation

The state of the film surface was evaluated with the naked eye to determine which of the following is met.
G: No change from before the test is observed.
F: Some whitening is observed.
NG: Whitening is observed.

### • Antifog properties evaluation using high-temperature water vapor

### (High-temperature water vapor evaluation)

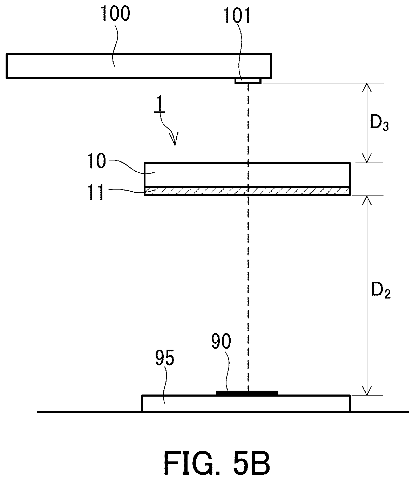

As shown in FIG. 5A, above a stainless-steel heat-retaining cup 80 containing boiled water 70, the antifog-film-attached glass article 1 was held in a horizontal position so that the antifog film 11 formation side of the antifog-film-attached glass article 1 faced the heat-retaining cup 80. While water vapor was supplied, the temperature of the water 70 was maintained at 90 to 100°C. A distance D₁ between the antifog film and the surface of the water was set to 60 mm. Additionally, the internal space of the heat-retaining cup 80 had a shape of a circular column with a 64-mm diameter opening, and the volume of the water 70 was set to about 130 cc. The antifog-film-attached glass article 1 was held above the heat-retaining cup 80 for 30 seconds to supply high-temperature water vapor to the antifog film 11. Subsequently, as shown in FIG. 5B, the heat-retaining cup 80 was removed and a sheet 95 with a predetermined QR code 90 printed thereon was disposed instead. A distance D₂ between the antifog film 11 and the sheet 95 was set to 110 mm. In this state, the QR code 90 was photographed with a camera 100 from above through the antifog-film-attached glass article 1 to check whether the information of the QR code 90 was readable. A distance D₃ between the glass base 10 and a lens 101 of the camera 100 was set to 80 mm. The process from the removal of the heat-retaining cup 80, that is, the stop of the supply of the high-temperature water vapor, to the photographing of the QR code was performed within 30 seconds.

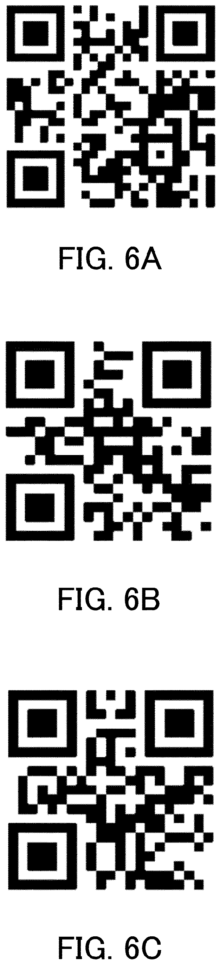

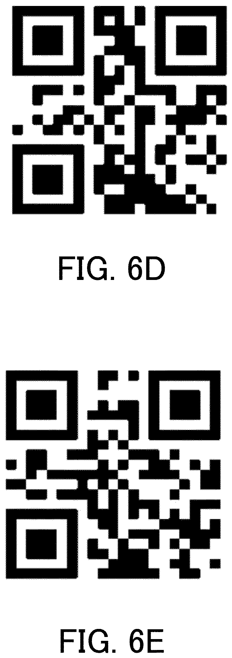

The QR codes used were of the five types shown in FIG. 6A to FIG. 6E. The QR code of the smallest size from which the information was readable was specified and determined as the evaluation results. The size and information of the QR codes used are as follows. For example, in the case where the QR code SSS is readable, character information "Rank:SSS" is displayed.
QR code "SSS": 10 mm × 10 mm, information "Rank:SSS" (FIG. 6A)
QR Code "SS": 15 mm × 15 mm, information "Rank:SS" (FIG. 6B)
QR Code "S": 20 mm × 20 mm, information "Rank:S" (FIG. 6C)
QR Code "A": 30 mm × 30 mm, information "Rank:A" (FIG. 6D)
QR Code "B": 40 mm × 40 mm, information "Rank:B" (FIG. 6E)

The case where none of the QR codes had been readable was evaluated as "X", and the case where the film had been eluted or peeled off due to contact with high-temperature water vapor was evaluated as "Y".

The QR code "SSS" shown in FIG. 6A was obtained by encoding, as the information, the above character string under a symbol size of 25 × 25 modules and a specification of error correction level H, in accordance with JIS X 0510: 2018. The respective QR codes "SS", "S", "A", and "B" shown in FIG. 6B to FIG. 6E are each obtained by encoding, as the information, the above character string under a symbol size of 21 × 21 modules and a specification of error correction level H, in accordance with JIS X 0510: 2018. Note that the character strings are each composed of not double-byte characters but single-byte characters (1-byte codes).

The camera used was smartphone "Xperia XZ2" manufactured by Sony Corporation (model name: SO-03K, OS: Android (registered trademark) (ver. 10)). For QR code reading, the QR code reading function of LINE (registered trademark) application (ver. 11.7.2) was used.

### (Example 1)

### (Preparation of coating liquid)

An amount of 20 mass% of LAMBIC 771W (manufactured by OSAKA ORGANIC CHEMICAL INDUSTRY LTD.) and 80 mass% of purified water were mixed to prepare a coating liquid.

### (Production of sample)

The glass sheet used was float glass (size: 50 mm × 50 mm, thickness: 1.1 mm) subjected in advance to alkaline cleaning. Onto the bottom surface of this float glass, the coating liquid was applied by spin coating (at 1500 rpm for 10 seconds) to form a coating film. Next, the float glass on which the coating film had been formed was heated in an oven under conditions of 100°C and 15 minutes. Thus, an antifog-film-attached glass article was obtained. The cleaning liquid used for the alkaline cleaning was a 25% aqueous solution of potassium hydroxide (LBC-1 manufactured by LEYBOLD Co., Ltd.).

### (Example 2)

An antifog-film-attached glass article according to Example 2 was obtained in the same manner as in Example 1 except the following points. The float glass was subjected in advance to alkaline cleaning and then further subjected to atmospheric-pressure plasma cleaning (AP plasma cleaning). The AP plasma cleaning was performed with controller CSM-SSC1 (nozzle: CSM-BG, power: 1000 W, treatment time: 10 seconds) manufactured by CSM Instruments Inc.

### (Examples 3 to 6)

Antifog-film-attached glass articles according to Examples 3 to 6 were obtained in the same manner as in Example 1 except that the heating conditions were changed to those described in Table 1.

In each of Examples 1 to 6, the film thickness of the antifog film was measured with an SEM. The antifog film according to each of Examples 1 to 6 had a film thickness of about 55 nm.

### (Example 7)

An antifog-film-attached glass article according to Example 7 was obtained in the same manner as in Example 1 except that the conditions for spin coating were changed to 300 rpm and 10 seconds. The antifog film according to Example 7 had a film thickness of about 395 nm.

### (Example 8)

An antifog-film-attached glass article according to Example 8 was obtained in the same manner as in Example 1 except that the coating liquid was applied by dropping onto the glass sheet instead of spin coating.

### (Example 9)

An antifog-film-attached glass article according to Example 8 was obtained in the same manner as in Example 2 except that the coating liquid was applied onto the top surface of the float glass.

### (Comparative Examples 1 to 5)

Antifog-film-attached glass articles according to Comparative Examples 1 to 5 were obtained in the same manner as in Example 1 except that the cleaning of the float glass, the application method for the coating liquid, and the heating conditions for the float glass on which the coating film had been formed were changed as described in Table 2. Note that, in Comparative Examples 1 to 3, the heating of the coating film was omitted. Furthermore, in Comparative Example 3, the float glass was subjected to alkaline cleaning twice.

The results of the water immersion test are shown in Tables 1 and 2.

**[Table 1]**

| Example | Cleaning | Application method | Heating conditions | Base treatment surface | Water immersion test (24 hours) | | Water immersion test (100 hours) | |
|---|---|---|---|---|---|---|---|---|
| | | | | | Appearance | High-temper ature water vapor | Appearance | High-temper ature water vapor |
| 1 | Alkaline | 1500 rpm, 10 sec | 100°C, 15 min | Bottom surface | G | SSS | G | SSS |
| 2 | Alkaline + AP plasma | 1500 rpm, 10 sec | 100°C, 15 min | Bottom surface | G | SSS | G | SSS |
| 3 | Alkaline | 1500 rpm, 10 sec | 120°C, 15 min | Bottom surface | G | SSS | G | SSS |
| 4 | Alkaline | 1500 rpm, 10 sec | 140°C, 15 min | Bottom surface | G | SSS | G | SSS |
| 5 | Alkaline | 1500 rpm, 10 sec | 160°C, 15 min | Bottom surface | G | SSS | G | SSS |
| 6 | Alkaline | 1500 rpm, 10 sec | 100°C, 30 min | Bottom surface | G | SSS | G | SSS |
| 7 | Alkaline | 300 rpm, 10 sec | 100°C, 15 min | Bottom surface | G | SSS | G | SSS |
| 8 | Alkaline | Dropping | 100°C, 15 min | Bottom surface | G | SSS | G | SSS |
| 9 | Alkaline + AP plasma | 1500 rpm, 10 sec | 100°C, 15 min | Top surface | G | SSS | G | SSS |

**Table 2]**

| Compar. Example | Cleaning | Application method | Heating conditions | Base treatment surface | Water immersion test (24 hours) | | Water immersion test (100 hours) | |
|---|---|---|---|---|---|---|---|---|
| | | | | | Appearance | High-temperature water vapor | Appearance | High-temperature water vapor |
| 1 | Alkaline | 1500 rpm, 10 sec | - | Top surface | - | (X) | - | - |
| 2 | AP plasma | 1500 rpm, 10 sec | - | Top surface | - | (X) | - | - |
| 3 | Alkaline + Alkaline | 1500 rpm, 10 sec | - | Top surface | - | (X) | - | - |
| 4 | Alkaline | 1500 rpm, 10 sec | 80°C, 15 min | Bottom surface | G | SS | G | X |
| 5 | Alkaline | 1500 rpm, 10 sec | 200°C, 15 min | Bottom surface | G | SS | G | X |

| | | | | | | | | |
|---|---|---|---|---|---|---|---|---|
| • Evaluation X for Comparative Examples 1 to 3 results from high-temperature water vapor evaluation performed prior to water immersion (0-hour immersion). | | | | | | | | |

In Comparative Examples 1 to 3, according to the high-temperature water vapor evaluation performed prior to the water immersion test, fogging due to dew condensation was observed on the antifog film to such an extent that the QR code was not readable (evaluated as X). Accordingly, the water immersion test was omitted. Additionally, the antifog film according to Example 8, which had been formed by dropping, had a slightly large film thickness, about 330 nm.

The antifog-film-attached glass articles according to the examples were each evaluated as "SSS" in the high-temperature water vapor evaluation performed after the water immersion test (for 100 hours). In each of the antifog films of the glass articles according to the examples, at the stop time point of the supply of high-temperature water vapor, a continuous film of water having a uniform thickness was formed on the surface of the antifog film, and the transparency of the antifog-film-attached glass article was ensured while neither whitening of the film itself nor fogging due to dew condensation was observed. Additionally, the transparent continuous films of the examples evaluated as "SSS" each coated 90% or more of the surface of the antifog film exposed to water vapor, more specifically, coated substantially the entirety of the above surface. In contrast, in each of Comparative Examples 4 and 5, fogging due to dew condensation occurred on the film, and consequently even the QR code of the largest size was not readable.

Next, the following evaluations were performed on the examples and Comparative Examples 4 and 5. The results are shown in Tables 3 and 4.

**[Table 3]**

| Example | Initial state | | Repeated antifog test | | Alcohol abrasion test | |
|---|---|---|---|---|---|---|
| | Appearance | Haze ratio (%) | Appearance | High-temperature water vapor | Appearance | High-temperature water vapor |
| 1 | G | 0.10 | G | SSS | G | SSS |
| 2 | G | 0.10 | G | SSS | G | SSS |
| 3 | G | 0.10 | G | SSS | G | SSS |
| 4 | G | 0.10 | G | SSS | G | SSS |
| 5 | G | 0.10 | G | SSS | G | SSS |
| 6 | G | 0.10 | G | SSS | G | SSS |
| 7 | G | 0.10 | G | SSS | G | SSS |
| 8 | G* | 0.50 | G | SSS | G | SSS |
| 9 | G | 0.10 | G | SSS | G | SSS |

| | | | | | | |
|---|---|---|---|---|---|---|
| • G*: Some distortion was observed but was eliminated by wet wiping. | | | | | | |

**[Table 4]**

| Comparative Example | Alcohol abrasion test | |
|---|---|---|
| | Appearance | High-temperature water vapor |
| 4 | G | B |
| 5 | G | B |

### (Initial state)

The antifog-film-attached glass article in the initial state where the antifog film had been formed was subjected to an appearance evaluation in the same manner as described above, and furthermore subjected to a haze ratio measurement.

### (Repeated antifog test)

The antifog-film-attached glass article in the initial state where the antifog film had been formed was subjected to supply of high-temperature water vapor to the antifog film in the same manner as in the high-temperature water vapor evaluation. Subsequently, the antifog-film-attached glass article was removed and leaned against a holder for drying. The sample dried was again repeatedly subjected to supply of high-temperature water vapor to the antifog film and drying, where high-temperature water vapor was supplied to the antifog film 10 times. Subsequently, an appearance evaluation and a high-temperature water vapor evaluation were performed in the same manner as described above. Additionally, in the high-temperature water vapor evaluation, the QR code photographing was performed without performing the 11th water vapor supply (immediately after the completion of the 10th water vapor supply).

### (Alcohol abrasion test)

An amount of 0.5 cc of an alcohol solvent containing ethanol as the main component ("FineeterA-10" manufactured by FUTABA PURE CHEMICAL CO, LTD.) was dropped for impregnation onto a nonwoven fabric wiper ("BEMCOT M-3II" manufactured by Asahi Kasei Corporation) cut into a width of 25 mm, and then the wiper and the antifog-film-attached glass article were set in a reciprocating abrasion tester. With a load of 400 g applied to the wiper, reciprocation for a length of 30 mm was performed 20 times. Subsequently, an appearance evaluation and a high-temperature water vapor evaluation were performed in the same manner as described above.

## Claims

1. An antifog-film-attached glass article for security cameras, the antifog-film-attached glass article comprising:
a glass base; and
an antifog film on a surface of the glass base, wherein
in a test in which:
the antifog-film-attached glass article is immersed in water at 25°C for 100 hours and removed from the water;
subsequently the antifog film is exposed for 30 seconds to water vapor generated from water at 90°C to 100°C disposed at a distance of 60 mm from the antifog film downward in a vertical direction; and
subsequently a judgment is made as to whether information of a QR code disposed at a distance of 110 mm from the antifog film downward in the direction is readable with a camera from an opposite side to a formation side of the antifog film,
information of a QR code of a 40 mm square size is readable
where the QR code is a two-dimensional code obtained by encoding, as the information, a character string "Rank:B" under a symbol size of 21 × 21 modules and a specification of error correction level H, in accordance with Japanese Industrial Standards (JIS) X 0510: 2018.

2. The antifog-film-attached glass article for security cameras according to claim 1, wherein
in the test, information of a QR code of a 15 mm square size is readable
where the QR code of a 15 mm square size is a two-dimensional code obtained by encoding, as the information, a character string "Rank:SS" under a symbol size of 21 × 21 modules and a specification of error correction level H, in accordance with Japanese Industrial Standards (JIS) X 0510: 2018.

3. The antifog-film-attached glass article for security cameras according to claim 1 or 2, wherein
in the test, information of a QR code of a 10 mm square size is readable
where the QR code of a 10 mm square size is a two-dimensional code obtained by encoding, as the information, a character string "Rank:SSS" under a symbol size of 25 × 25 modules and a specification of error correction level H, in accordance with Japanese Industrial Standards (JIS) X 0510: 2018.

4. An antifog-film-attached glass article for security cameras, the antifog-film-attached glass article comprising:
a glass base; and
an antifog film on a surface of the glass base, wherein
the antifog film includes an organic polymer having a betaine structure, and
when a test is performed in which: the antifog-film-attached glass article is immersed in water at 25°C for 100 hours and removed from the water; and subsequently the antifog film is exposed for 30 seconds to water vapor generated from water at 90°C to 100°C disposed at a distance of 60 mm from the antifog film downward in a vertical direction,
a transparent continuous film is formed on a surface of the antifog film exposed to the water vapor.

5. The antifog-film-attached glass article for security cameras according to any one of claims 1 to 3, wherein
the antifog film includes an organic polymer having a betaine structure.

6. The antifog-film-attached glass article for security cameras according to any one of claims 1 to 5, wherein
the glass base is float glass, and
the antifog film is formed on a bottom surface of the float glass.

7. The antifog-film-attached glass article for security cameras according to any one of claims 1 to 6, wherein
the glass base has a concave surface adjacent to a space in which a lens of a security camera is to be placed.

8. A security camera comprising:
a camera; and
the antifog-film-attached glass article for security cameras according to any one of claims 1 to 7 disposed in front of a lens of the camera.

9. A method for manufacturing an antifog-film-attached glass article for security cameras, the antifog-film-attached glass article including a glass base and an antifog film on the glass base, the method comprising:
applying, onto a surface of the glass base, a coating liquid including an organic polymer having a betaine structure; and
heating, at a temperature of 90 to 190°C, the glass base onto which the coating liquid has been applied.

10. The method according to claim 9, wherein
the glass base is float glass, and
prior to the applying the coating liquid,
when the surface of the float glass onto which the coating liquid is to be applied is a bottom surface, the bottom surface is subjected to at least alkaline cleaning, and
when the surface of the float glass onto which the coating liquid is to be applied is a top surface, the top surface is subjected to both alkaline cleaning and plasma cleaning.

11. The method according to claim 10, wherein
the bottom surface is subjected to both alkaline cleaning and plasma cleaning.
